# EUROPEAN PATENT APPLICATION

(11) **EP 4 779 861 A1**
(43) Date of publication of application: **22.07.2026**
(21) Application number: 25152313.0
(22) Date of filing: 16.01.2025
(51) Int. Cl.: H02P 25/064, B65G 54/00, G05B 17/00

(54) **METHOD FOR OPERATING A LINEAR MOTOR**

(71) Applicant: ABB SCHWEIZ AG, 5400 Baden (CH)
(72) Inventor: Flixeder, Stefan, 4840 Vöcklabruck (AT); Almeder, Alexander, 3910 Zwettl (AT)
(74) Representative: Weiss Patentanwalts GmbH

(57) **Abstract**

In order to consider the surroundings of the linear motor (1) in a more flexible and simpler way during movement of a shuttle (Tn) in the stator workspace (3) of the linear motor (1), it is provided, that a virtual workspace (6) is defined in the motor control unit (10), the virtual workspace (6) virtually extending the stator workspace (3) so that the stator workspace (3) and the virtual workspace (6) form a contiguous workspace for the shuttle (Tn), in that a movement of a virtual shuttle (VTk) in the virtual workspace (6) is simulated in the motor control unit using given virtual shuttle movement setpoints (VMSk) of the virtual shuttle (VTk), and in that the simulated movement of the virtual shuttle (VTk) in the virtual workspace (6) affects the shuttle movement setpoints (MSn) for moving the at least one shuttle (Tn) on the stator workspace (3) or in that the movement of the at least one shuttle (Tn) in the stator workspace (3) affects the virtual shuttle movement setpoints (VMSk) for moving the virtual shuttle (VTk) in the virtual workspace (6).

## Description

Present invention pertains to a method for operating a linear motor having a stator with at least one stator segment and at least one shuttle, wherein the stator defines a stator workspace along which the shuttle is movable on the stator, wherein a plurality of magnetic elements are arranged on the stator and a plurality of drive magnets is arranged on the shuttle, or vice versa, wherein at least some of the plurality of magnetic elements are activated under control of a motor control unit in order to generate an electromagnetic field that interacts with the plurality of drive magnets in order to move the shuttle in the stator workspace under control of the motor control unit in accordance with given shuttle movement setpoints. The invention does also pertain to a respective linear motor.

The basic inventive idea is also applicable to a method for operating a linear motor that is connected to an external handling device, the linear motor having a stator with at least one stator segment and at least one shuttle, wherein the stator defines a stator workspace along which the shuttle is movable on the stator, wherein a plurality of magnetic elements are arranged on the stator and a plurality of drive magnets is arranged on the shuttle, or vice versa, wherein at least some of the plurality of magnetic elements are activated under control of a first motor control unit in order to generate an electromagnetic field that interacts with the plurality of drive magnets in order to move the shuttle in the stator workspace under control of the motor control unit in accordance with given shuttle movement setpoints, and the external handling device is provided to move a shuttle under control of a second motor control unit.

Linear motors can be distinguished between long-stator linear motors (LLM) and planar motors (PLM). In both cases a shuttle of the linear motor is provided that is moved in a defined workspace of the linear motor as a result of an interaction of (electro) magnetic fields produced by the shuttle and the stator of the linear motor. The main difference is that in a long-stator linear motor, the stator extends only in direction of movement of a shuttle, whereas in a planar motor, the stator extends two-dimensionally and provides a movement plane in which a shuttle can be moved freely in two directions. The workspace of a LLM /PLM assembly basically consists of all positions that can be actively (due to the interaction of (electro) magnetic fields) reached by shuttles on the stator.

In a long-stator linear motor, a plurality of magnetic elements is arranged next to one another in a stationary manner along a stator. The magnetic elements can be electrical drive coils. The drive coils are controlled by a control unit to generate a time-varying and in the workspace moving magnetic field in the desired direction of movement by activating the respective drive coils of the stator in the region of a shuttle. Alternatively, magnetic elements can be permanent magnets, which are moveably arranged on the stator to generate the time-varying and moving magnetic field. A number of drive magnets, either as permanent magnets or as an electrical coil or a short-circuit winding, which are separated by an air gap from the magnetic elements of the stator and which interact with the magnetic elements, are arranged on a shuttle. It is also possible that the magnetic elements are arranged on the shuttle and the drive magnets on the stator.

By generating a time-varying magnetic field with the magnetic elements, e.g. by energizing the drive coils in the region of the drive magnets of the shuttle, a magnetic field can be generated which interacts with the magnetic field of the drive magnets in order to generate a propulsive force and/or a normal force (in the direction transverse to the movement direction) acting on the shuttle. The shuttle is moved by the generated propulsive force. As a result, the shuttle can be moved in the desired manner in the workspace. It is also possible, and usually the case, to have several shuttles that are moved simultaneously and independently from each other in the workspace.

Usually, the stator comprises a plurality of stator segments, with each stator segment having a specific number of magnetic elements or drive magnets. The stator segments can also have different geometries, such as straight lines, curves, switches etc. The stator segments can then be assembled to form the desired stator by arranging them next to each other. A stator therefore builds a track for the shuttle, the shuttle follows during movement. It is also possible to have several tracks in a long-stator linear motor that are connected by switches or other track connection units. A shuttle may then change tracks at a switch or other track connection unit.

Examples of long-stator linear motors can be found in WO 2013/143783 A1, US 6,876,107 B2, US 2013/0074724 A1 or WO 2004/103792 A1.

A planar motor substantially has a stator which forms a two-dimensional workspace, i.e. the workspace is a plane. One or more stator segments usually build the stator of the planar motor. A stator segment is usually in the shape of square or rectangle. Stator segments can be arranged to form virtually any desired workspace - from squares, rectangles to complex shapes that traverse around other equipment or to link different working stations of a production process, for example. One or more shuttles can be moved in each case mainly in two dimensions in the planar workspace formed by the stator. For this purpose, magnetic elements are usually arranged on the stator, in particular on the stator segments of the planar motor. The magnetic elements can be electrical drive coils. The drive coils are controlled by a control unit to generate a time-varying and moving magnetic field in the desired direction of movement by activating the respective drive coils of the stator in the region of a shuttle. Alternatively, magnetic elements can be permanent magnets, which are moveably arranged on the stator to generate the time-varying and moving magnetic field. The shuttle comprises a magnet unit which includes drive magnets (permanent magnets or electromagnets). The drive magnets are arranged two-dimensionally distributed on the shuttle. The magnet unit of the shuttle or rather the drive magnets of the magnet unit interact electromagnetically with the magnetic field of the stator so that a propulsive force and a levitation force (normal on the workspace) can be exerted on the shuttle. Furthermore, it is also conceivable that only fixed permanent magnets are mounted on the stator as magnetic elements and the moving magnetic field is generated on the shuttle.

The propulsive force generated by the electromagnetic interaction between shuttle and stator can be used to move the shuttle in the workspace in the desired direction of movement. The levitation force can be used to lift off the shuttle from the stator surface during operation to an operation height (e.g., a few millimeters to a few centimeters) and to maintain the shuttle at that operation height during operation. Thus, for example, an air gap is created and/or configured by the levitation force. Additionally, tilting forces and moments acting on the shuttle can also be generated for more complex movements.

Planar motors are also well known in prior art. US 9,202,719 B2, for example, discloses the basic structure and the mode of operation of a planar motor.

The invention pertains to planar motors, as well as to long-stator linear motors. In the following only the term "linear motor" is used that encompasses both, i.e. planar motors and long-stator linear motor.

The movement of shuttles in the workspace is controlled by a motor control unit. Each shuttle may be moved independently from the other shuttles, wherein the motor control unit takes care of possible collisions and controls movement of the shuttles so that collisions between shuttles in the workspace are avoided. This works well within the workspace.

There are, however, situations which cannot be covered by the collision avoidance function of the motor control unit. It is possible that in the vicinity of the linear motor, shuttles are moved by other handling devices. A robot may be used to take off shuttles from the linear motor or to put shuttles onto the linear motor, for example. A robot or robot arm (without carrying a shuttle) may move in the vicinity of a linear motor. Collisions of shuttles on the linear motor with the robot or robot arm are to be avoided. A continuous conveyor may be used to move shuttles over certain regions, for example, as a conveyor is cheaper and simpler than a linear motor. A conveyor may also be used to connect two linear motors, so that a shuttle from one linear motor is moved onto the other linear motor by means of the conveyor. It is also possible that a shuttle is moved to an inspection area where the shuttle is moved manually by an operator for inspecting the shuttle. It is also conceivable that the shuttle carries a product carrier or product that is larger than the shuttle itself so that the product carrier or the product protrudes from the contour of the shuttle in at least one direction. It may therefore happen that the product carrier or the product on the shuttle reaches out of the stator workspace into the surroundings of the linear motor, although the shuttle is still in the workspace. In such situations, the motor control unit cannot avoid collisions with shuttles outside the workspace of the linear motor, as the motor control unit has no knowledge of the position and movement of shuttles outside the workspace.

It can also happen that the movement of a shuttle by a handling device other than the linear motor is affected by an error of the handling device. Such error states may also affect movement of the shuttles on the linear motor which could make changes in the movement of a shuttle in the workspace necessary. So far, this is, however, not possible as the motor control unit does not know of errors of external handling devices.

Up to now, it was only possible to handle such particular use cases when the motor control software was specifically programmed to do so. This required, however, significant programming effort as every single use case required its specific control software.

It is an object of the present invention to consider the surroundings of the linear motor in a more flexible and simpler way during movement of a shuttle in the stator workspace of the linear motor.

This object is achieved in that a virtual workspace is defined in the motor control unit, the virtual workspace virtually extending the stator workspace so that the stator workspace and the virtual workspace form a contiguous workspace for the shuttle, in that a movement of a virtual shuttle in the virtual workspace is simulated in the motor control unit using given virtual shuttle movement setpoints of the virtual shuttle, and in that the simulated movement of the virtual shuttle in the virtual workspace affects the shuttle movement setpoints for moving the shuttle on the stator workspace or in that the movement of the shuttle in the stator workspace affects the virtual shuttle movement setpoints for moving the virtual shuttle in the virtual workspace. The virtual workspace with the virtual shuttle allows to consider shuttles in the surroundings of the linear motor for the movement of a shuttle in the stator workspace. This concept of the virtual workspace can be used to implement collision avoidance between a shuttle in the stator workspace and a shuttle in the surroundings of the linear motor, for synchronizing the movement of the stator in the stator workspace to another movement or to implement a simple error propagation to name a few. This allows that the surroundings of a linear motor can directly be considered in the movement of a shuttle on the linear motor. To this end, only the virtual workspace needs to be configured in the motor control unit.

The concept of the virtual workspace may also advantageously be used in a method for operating a linear motor that is connected to an external handling device. In such an application, a virtual workspace is defined in the first motor control unit, the virtual workspace virtually extending the stator workspace so that the stator workspace and the virtual workspace form a contiguous workspace for the shuttle, and, for the at least one shuttle on the stator workspace, a target position on the virtual workspace is set and the first motor control unit controls the magnetic elements to move the shuttle to the target position. This allows commanding the shuttle to move to a position that could otherwise not be reached by the shuttle because of the stator workspace restrictions. The virtual workspace used in that way allows an easy, but yet robust shuttle handover between the linear motor and the external handling device, even at high shuttle speeds. Also in this application, a movement of a virtual shuttle in the virtual workspace can be simulated in the first motor control unit using given virtual shuttle movement setpoints of the virtual shuttle.

When the shuttle movement setpoints for moving the shuttle on the stator workspace are set so that the movement of the shuttle on the stator workspace follows the simulated movement of the virtual shuttle in the virtual workspace, the shuttle movement can be synchronized to a defined movement in a very simple manner.

It is especially advantageous, when the shuttle movement setpoints for moving the shuttle on the stator workspace are affected to avoid collision with the virtual shuttle in the virtual workspace. An existing collision avoidance of the motor control unit can be used as the simulated virtual shuttle can be regarded by the collision avoidance of the motor control unit as any other real shuttle. Hence, there is no need to change the existing collision avoidance. The collision avoidance of the motor control unit is "extended" in that way to take into consideration also the surroundings of the linear motor that is covered by the virtual workspace.

When the shuttle movement setpoints for moving the shuttle on the stator workspace are affected to bring the shuttle on the stator workspace to a standstill, a simple error propagation method can be implemented. When the virtual workspace represents an external handling device for moving a shuttle, for example, an error in the external handling device would also be reflected in the simulation of the virtual shuttle. Such an error, causing the virtual shuttle to stop for example, may then be propagated in a controlled manner to the linear motor. This allows the linear motor to react on external errors very early which helps to avoid severe error states of the linear motor.

The shuttle movement setpoints for moving the shuttle on the stator workspace can also be affected to change the movement path of the shuttle on the stator workspace. This can be used for collision avoidance and for error propagation, for example.

Error propagation can also be implanted in the other direction, in that the movement of a shuttle in the stator workspace is changed to a defined shuttle error movement when the stator in the region of the shuttle enters into an error state causing the virtual shuttle to also change its movement to a defined virtual shuttle error movement.

The present invention is described below in greater detail with reference to Figs. 1 to 5 which show schematic and non-limiting advantageous embodiments of the invention by way of example. In the drawings:
Fig.1 and Fig.2 show a possible construction of a planar motor,
Fig.3 a linear motor with a stator workspace that is extended by a virtual workspace in accordance to the invention,
Fig.4 shows a linear motor connected to a conveyor as external handling device,
Fig.5 shows application of the virtual workspace for shuttle handover.

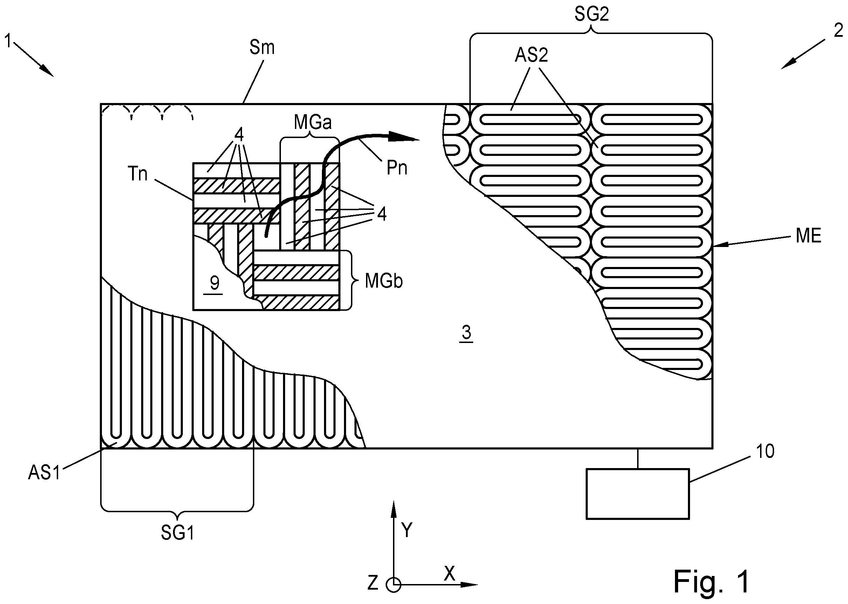

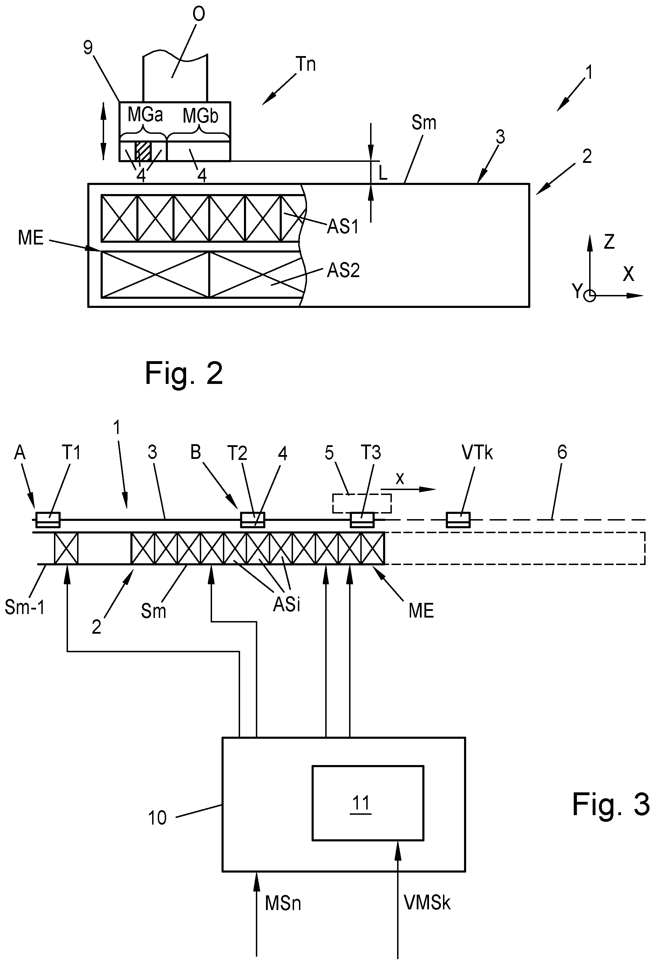

With reference to Figs.1 and Fig.2 the well-known principle of a planar motor as example of a linear motor 1 is explained by way of an exemplary embodiment. Fig.1 shows the planar motor in a partially broken-away plan view, and Fig.2 shows the planar motor in a partially broken-away side view. The planar motor has at least one stator segment Sm. "m" is used as an index in order to be able to distinguish different stator segments, wherein, generally, the reference sign Sm is used when no specific stator segment is addressed. Several segments Sm may arranged next to each other to form the stator 2 of the planar motor. The stator segment(s) Sm form the stator 2 with a stator workspace 3. At least one shuttle Tn is movable in the stator workspace 3 at least two-dimensionally in two main movement directions, that correspond to x and y axis of a cartesian coordinate system, "n" is used as an index in order to be able to distinguish different shuttles, if need be, wherein, generally, the reference sign Tn is used when no specific shuttle is addressed. The stator workspace 3 of a planar motor is a movement plane determined by the size and shape of the stator 2. The stator workspace 3 can be oriented in space in any way. For the sake of simplicity, only one stator segment Sm is shown in Fig.1. Of course, a plurality of stator segments Sm (which can be different in shape) is usually arranged next to each other in order to form the stator 2 and a larger stator workspace 3. As a result, the planar motor can have a modular stator workspace 3 of different shapes and sizes defined by the arrangement of stator segments Sm. In the stator workspace 3 of the stator 2, several shuttles Tn can be moved simultaneously and independently of one another. It is even possible to use shuttles Tn of different size or shape, for transporting different objects O, for example.

It is to note, that the useable stator workspace 3 does not necessarily correspond to the complete movement plane formed by the stator segments Sm. It is possible that the shuttles Tn are blocked from entering certain defined blocked regions BR of the movement plane 3.

In general, the stator workspace 3 of a linear motor 1 basically consists of all positions on the stator 2 that can be actively reached by shuttles Tn.

In the embodiment of Fig.1, a first coil group SG1 with several drive coils AS1 (as magnetic elements ME), which defines the first main movement direction, and a second coil group SG2 with several drive coils AS2 (as magnetic elements ME), which defines the second main movement direction, are arranged on the stator segment Sm. In general, the drive coils are also designated by ASi, where "i" is an index, in order to be able to distinguish the drive coils if necessary. The drive coils AS1 of the first coil group SG1 are arranged next to each other in a specific direction - in this case, in the X-direction of a Cartesian coordinate system - in order to form the first main movement direction for the movement of the shuttle Tn. The drive coils AS2 of the second coil group SG2 are arranged next to each other in a specific direction - in this case, the Y-direction of a Cartesian coordinate system - in order to form a second main movement direction for the shuttle Tn. The drive coils AS1, AS2 of the first and second coil groups SG1, SG2, as shown in Fig. 1, are preferably arranged such that the two main movement directions are orthogonal to one another. Usually, the drive coils AS1, AS2 are arranged above each other (as seen in Z-direction).

Several drive magnets 4 are arranged on the at least one shuttle Tn, which interact electromagnetically with drive coils AS1, AS2 of at least one of the two coil groups SG1, SG2 in the region of the shuttle Tn for moving the shuttle Tn. For this purpose, the shuttle Tn generally has a main body 9, on the underside of which (facing the stator 2) the drive magnets 4 are arranged, as can be seen in Fig.2. In Fig. 1, the main body 9 is shown largely broken away to be able to see the arrangement of the drive magnets 4. As indicated in Fig.2, the drive magnets 4 are arranged in several magnet groups MGa, MGb. The drive magnets 4 are usually arranged with alternating polarity, as indicated in Fig.2. The drive magnets 4 can also be oriented differently in the different magnet groups MGa, MGb.

In the example shown, two first magnet groups MGa and two second magnet groups MGb are arranged on the shuttle Tn. However, a single first magnet group MGa and a single second magnet group MGb per shuttle Tn is sufficient to move the shuttle Tn in the movement plane 3. Of course, more than two first magnet groups MGa and more than two second magnet groups MGb can also be arranged per shuttle Tn. There are many different arrangements of magnet groups MGa, MGb known, like a 1-D arrangement, 2-D arrangement, a Halbach arrangement etc.

With a planar motor as shown in Fig.1 and Fig.2, a substantially unrestricted movement of a shuttle Tn in the two main movement directions in the stator workspace 3 would be possible. It would in this case be possible to move the shuttle Tn, for example, only along the X-axis or only along the Y-axis. The shuttle Tn can naturally be moved simultaneously in both main movement directions, e.g., along a two-dimensional movement path Pn lying in the stator workspace 3 with an X-coordinate and a Y-coordinate, as indicated on the shuttle Tn in Fig.1. But also the other four degrees of freedom of the shuttle Tn can also be used in a planar motor at least to a limited extent (translational movement in the vertical direction Z and rotation about the three axes X, Y, Z).

Magnetic elements ME, like drive coils ASi, can also be arranged one above the other in the normal direction (here, in the Z-direction). In the embodiment according to Fig.2, the drive coils AS1 of the first coil group SG1 are arranged closer to the movement plane 3 in the direction perpendicular to the movement plane 3 (here, in the Z-direction) than the drive coils AS2 of the second coil group SG2. There are many different arrangements of drive coils ASi known, like a single-layer arrangements, a herringbone arrangement, a double-layer arrangement etc.

A long-stator linear motor (LLM), as further example of a linear motor 1, differs from a planar motor mainly in that the magnetic elements ME, like drive coils ASi, are arranged next to each other along the stator 2 so that the stator workspace 3 is reduced to a movement line that is defined by the geometric shape of the stator 2. The shuttles Tn are usually guided mechanically on the stator 2. It Is not necessary to have magnetic elements ME, like drive coils ASi, for different directions in a long-stator linear motor but only in direction of movement, i.e. along the stator 2. Also on a shuttle Tn of long-stator linear motor, there are usually not drive magnets for different directions of movement but only for the defined direction of movement. Apart from that, all said above with reference to the planar motor, may also apply to a long-stator linear motor.

A motor control unit 10 is also provided in the linear motor 1, with which the magnetic elements ME, like the drive coils ASi, of the stator segment 2 are controlled, as indicated in Fig. 1, in order to generate the magnetic fields for moving a shuttle Tn. Controlling drive coils ASi basically means that the drive coils ASi are activated (by applying an electric voltage or electric current to the drive coils ASi) in a certain way and over time to generate the required magnetic field for moving the shuttle Tn in the desired way (position, speed, acceleration, jerk, for example). For this purpose, power electronics can also be provided on a stator segment Sm, which power electronics generate the required coil voltages or coil currents and apply them to the drive coils ASi. Essentially, this means that the magnetic elements ME, like drive coils ASi, are activated by the motor control unit 10 such that the shuttle Tn executes a desired movement path Pn in the stator workspace 3 and with a desired motion profile, wherein the movement path Pn is not limited only to a movement in the main movement directions, but can also specify movements in the four other degrees of freedom. The motor control unit 10 controls not only the movement path Pn but also the dynamics of the movement, especially speed, acceleration, jerk, at any point in time.

The motor control unit 10 limits the stator workspace 3. As said above, the stator workspace 3 of a linear motor 1 basically consists of all positions on the stator 2 that can be actively reached by shuttles Tn. Considering the function of the motor control unit 10, the stator workspace 3 consists of all positions on the stator 2 that can be actively reached by shuttles Tn under control of the motor control unit 10. Magnetic elements ME that are not controlled by the motor control unit 10 cannot be part of the stator workspace 3.

An actual value of the movement of the shuttle Tn, e.g., an actual position (also an actual orientation of the shuttle Tn) or an actual speed, is usually also used for the implementation or control of the movement of the shuttle Tn in the control unit 10. For this purpose, suitable sensors (not shown in Fig.1 and Fig.2), e.g., position sensors, can also be arranged on the stator segment 2, the detected measured variables of which are transmitted as actual values of the movement to the motor control unit 10 or from which actual values of the movement are determined in the motor control unit 10.

The motor control unit 10 can be implemented as microprocessor-based hardware, e.g., as a computer, microcontroller, digital signal processor (DSP), programmable logic controller (PLC), etc., on which corresponding control programs (software) for implementing the respective functions run. An embodiment as an integrated circuit, such as, for example, an application-specific integrated circuit (ASCI) or field programmable gate array (FPGA), is also conceivable.

In operation of a planar motor, in a possible embodiment, a moving magnetic field is generated in the first main movement direction by corresponding activation of the first drive coils AS1. The moving magnetic field in the first main movement direction mainly interacts electromagnetically with the drive magnets 4 of the first magnet group(s) MGa in order to move the respective shuttle Tn in the first main movement direction. Analogously, by activating the second drive coils AS2, a substantially moving magnetic field is generated in the second main movement direction, which substantially moving magnetic field mainly interacts electromagnetically with the drive magnets 4 of the second magnet group(s) MGb in order to move the shuttle Tn in the second main movement direction. Depending upon the controlled activation of the drive coils AS1, AS2, the moving magnetic fields are superimposed, as a result of which the shuttle Tn can be moved in the desired manner along the prespecified two-dimensional movement path Pn in the stator workspace 3. As already mentioned also movements in further degrees of freedom could be realized as well.

The drive coils ASi are usually activated in such a way that a levitation force acts on the shuttle Tn in the direction of the Z-axis, with which levitation force the shuttle Tn is kept levitating above the stator workspace 3 for generating an air gap L (Fig.2) (which is also possible while the shuttle Tn is at a standstill).

It should be mentioned that in a linear motor 1, it is also possible that the magnetic elements ME, like drive coils ASi, are arranged on the shuttle Tn and the drive magnets 4 on the stator 2.

The above explanation regarding the structure and function of a linear motor 1 are merely for explanatory purposes and are not to be understood as limiting and serve only for better understanding the invention. For the present invention, it is irrelevant how the linear motor 1 is constructed in detail.

The basic inventive concept is explained in the following with respect to Fig.3. Fig.3 schematically shows a linear motor 1 (here in form of an LLM) having a stator 2 (here formed by stator segments Sm, Sm-1). Drive coils ASi (as magnetic elements ME) are arranged next to each other along the stator 2. A plurality of shuttles T1, T2, T3 is moved on the stator 2 of the linear motor 1. A motor control unit 10 controls the drive coils ASi by energizing the drive coils (at least in the region of a shuttle Tn) in order to move the shuttles Tn according to their given movement setpoints MSn. In Fig.3 control of only some drive coils ASi are indicated for reasons of simplicity. The stator 2 with the drive coils ASi under control of the motor control unit 10 defines a stator workspace 3 that is indicated as line in Fig.3.

The movement setpoints MSn can be provided to the motor control unit 10, by another control unit, for example, or could be determined by the motor control unit 10 itself, in order to achieve a certain defined motion of a shuttle Tn. The motor control unit 10 could calculate a movement to move the shuttle Tn form a given start point A to a given end point B in shortest time possible or according to any other specification, for example. The such calculated movement then defines the movement setpoints MSn for the shuttle Tn.

It is to be noted that usually a time discrete control of the movement of a shuttle Tn is implemented in the motor control unit 10. This means that a movement setpoint MSn is provided every control time step (typically in the 10 or 100 microsecond to 10 or 100 millisecond range). The motor control unit 10 then uses the set movement setpoint MSn to calculate a control variable (like a coil current or coil voltage) for every involved magnetic element ME, like every involved drive coil ASi, to be activated. The control variables are then used to activate the respective magnetic elements ME, like drive coils ASi. This is repeated in every control time step.

Usually, the motor control unit 10 also uses actual movement variables (like an actual position or actual speed) of the controlled shuttle Tn for controlling the movement of the shuttle Tn. The actual movement variable is typically used as feedback in a closed-loop-control. The actual movement variable can be measured using sensors on the linear motor 1, like position sensors, or can be calculated from other known or measured variables of the linear motor 1. In a time discrete control, the actual movement variable would be provided in every control time step.

It is obvious that the motor control unit 10 can control and observe (by detecting position of the shuttle Tn on the stator, for example) movement of a shuttle Tn only in the stator workspace 3. Controlling movement of the shuttle Tn with the motor control unit 10 beyond the stator workspace 3 is not possible. In Fig.3, for example, the shuttle T3 could only be moved to the end of stator segment Sm by the linear motor 1, but not beyond this point.

Within the stator workspace 3, the motor control unit 10 usually prevents two shuttles Tn for colliding with each other and ensures smooth handover of shuttles Tn over stator segment Sm boundaries (in case there is more than one stator segment Sm). For that reason, a collision avoidance function would be implemented in the motor control unit 10, usually as collision avoidance software running on the motor control unit 10. An example of a collision avoidance function for a LLM can be found in EP 3 202 612 A1 and for a PLM in EP 4 194 375 A1. It is however clear that a collision avoidance may fail at or in the region of the border of the stator workspace 3. A possible shuttle Tn handover method is described in EP 3 422 558 A1.

In the embodiment of Fig.3 shuttle T3 is shown with a product 5 (or a product carrier) that is transported with shuttle T3 and that protrudes beyond the contour of the shuttle T3 in direction of movement x. When the shuttle T3 is at the end of the stator workspace 3 or even in the region of the end of stator workspace 3, the product 5 (or product carrier) may extend into the surroundings of the linear motor 1 and a collision of the shuttle T3 carrying the product 5 (or product carrier) with another shuttle in the vicinity of the linear motor 1 would be possible. The same could happen when a shuttle in the surroundings of the linear motor 1 reaches partly into the stator workspace 3. A collision avoidance function in the motor control unit 10 could not prevent collisions in such cases as the motor control unit 10 has no knowledge of such other shuttles.

In accordance with the invention, a virtual workspace 6 is defined in the motor control unit 10. The virtual workspace 6 virtually extends the stator workspace 3 so that the stator workspace 3 and the virtual workspace 6 form a contiguous workspace for a shuttle Tn. A movement of a virtual shuttle VTk in the virtual workspace 6 is simulated in the motor control unit 10 with a movement simulation unit 11 using given virtual shuttle movement setpoints VMSk of the virtual shuttle VTk. Again, "k" is used as an index in order to be able to distinguish different virtual shuttles, if need be, wherein, generally, the reference sign VTk is used when no specific virtual shuttle is addressed. Advantageously, "simulation of a movement" means that the movement simulation unit 11 determines the virtual position of a virtual shuttle VTk in the virtual workspace 6 at a certain point in time, usually for every control time step. "Virtual" means that neither the virtual workspace 6 nor virtual shuttle VTk does exist in reality for the motor control unit 10, but only virtually in the simulation, i.e. as software. Therefore, the motor control unit 10 can neither control nor observe a virtual shuttle VTk in the virtual worlspace 6 in reality, but only as simulation. A virtual shuttle VTk may however be related to a real shuttle Tn in the real world and a virtual workspace 6 may relate to a real workspace in the real world, as explained in more detail below. "Contiguous" means that the virtual workspace 6 is arranged such relative to the stator workspace 3, so that movement of a shuttle Tn on the stator workspace 3 could be continued on the virtual workspace 6 if the virtual workspace 6 existed in the real world.

In a preferred embodiment, by simulating the movement of a virtual shuttle VTk in the virtual workspace 6 with the movement simulation unit 11, the virtual position of the virtual shuttle VTk in the virtual workspace 6 is known in every required moment in time.

The virtual shuttle movement setpoints VMSk could be provided to the motor control unit 10 (and to the movement simulation unit 11) or could be determined by the motor control unit 10 (comprising the movement simulation unit 11) itself. The virtual shuttle movement setpoints VMSk could be motion parameters, like position, speed, acceleration / deceleration etc. If the virtual shuttle VTk is related to a real shuttle, the virtual shuttle movement setpoints VMSk could be measured motion parameters, like position, speed, acceleration / deceleration etc., of the real shuttle. With a time discrete control of the movement of the shuttle Tn, the virtual shuttle movement setpoints VMSk would again be provided for every control time step.

The movement simulation unit 11 can be implemented as software running on the motor control unit 10. However, the movement simulation unit 11 could also be implemented as separate piece of hardware, like a microprocessor based hardware running respective software, that is part of the motor control unit 10.

In accordance with the invention, the simulated movement of the virtual shuttle VTk in the virtual workspace 6 affects the shuttle movement setpoints MSn for moving a shuttle Tn on the stator workspace 3. Or the movement of the shuttle Tn in the stator workspace 3 affects the virtual shuttle movement setpoints VMSk for moving a virtual shuttle VTk in the virtual workspace 6. The shuttle Tn is moved on the stator workspace 3 in accordance to a given motion defined by the shuttle movement setpoints MSn. "Affecting the shuttle movement" basically means that this given motion of the shuttle Tn is changed somehow in response to the simulated movement of the virtual shuttle VTk. The motion can be changed in its motion parameters, like speed, acceleration / declaration, or in its movement path Pn. In a PLM, the shuttle Tn can move more or less freely in the two-dimensional stator workspace 3. But also in a LLM can the movement path be changed when the LLM comprises different tracks connected by switches, for example.

This makes it possible, for example, that the shuttle movement setpoints MS3 of the shuttle T3 in Fig.3 are changed in accordance with the implemented collision avoidance if there is the risk that the shuttle T3 collides with a shuttle in the surroundings of the linear motor 1 that is simulated as virtual shuttle in the virtual workspace 6. Changing in this respect may mean that the shuttle T3 is stopped or that the speed of the shuttle T3 is reduced or that the movement of the shuttle Tn on the stator workspace 3 follows the simulated movement of the virtual shuttle VTk in the virtual workspace 6 (with a certain safety distance, for example). The latter allows also a synchronization of the movement of the shuttle Tn to the simulated movement of the virtual shuttle VTk in the virtual workspace 6. Changing may also mean that the movement path Pn of the shuttle T3 in the stator workspace 3 is changed.

This has the advantage that the existing collision avoidance of the linear motor 1 can be extended in a simple manner to cover also above-mentioned cases, as for the collision avoidance, the virtual shuttle VTk can be considered just like any other real shuttle Tn. There is no need to change the existing collision avoidance implemented in the motor control unit 10.

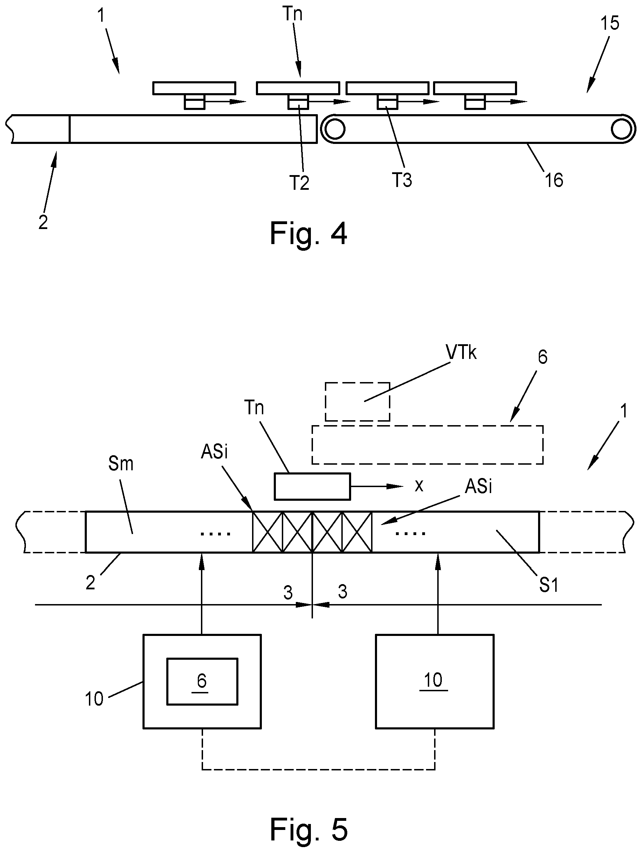

In a possible implementation, the linear motor 1 could be connected to an external handling device 15 for moving a shuttle Tn. The external handling device 15 could be a conveyor (as in Fig.4) or a robot or any other moveable support for the shuttle Tn or also a simple mechanical guide for a shuttle Tn or a processing station for processing a product transported onto a shuttle Tn. The external handling device 15 could even be a second linear motor 1. The moveable support could be provided to actively move the shuttle Tn on the moveable support in addition to the movement of the moveable support itself. The movement of the shuttle Tn by the external handling device 15 is usually known. This allows to use the known movement of the shuttle Tn by the external handling device 15 to simulate movement of a virtual shuttle VTk using the known movement as virtual shuttle movement setpoints VMSk or to obtain the virtual shuttle movement setpoints VSMi.

In the embodiment of Fig.4, the external handling device 15 is a conveyor 16 that is connected to the linear motor 1 such that a shuttle Tn of the linear motor 1 can be moved onto the conveyor 16 and moved further with the conveyor 16. The conveyor 16 could also connect the end of the linear motor 1 with the beginning of the linear motor 1 forming a closed loop for shuttles Tn. Shuttles Tn on the conveyor 16 are moved with the same conveyor speed set by the conveyor 16. Shuttles Tn on the linear motor 1 could be moved with higher speed. There is therefore a risk that a shuttle T2 moved in the stator workspace 3 collides with a slower shuttle T3 on the conveyor 16. In the motor control unit 10 (not shown in Fig.4) a virtual workspace 6 could be defined that represents the conveyor 16. The virtual shuttle movement setpoints VMSk could be provided as or obtained from the known conveyor speed. Moreover, the length of the virtual workspace 6 could be set to correspond to the conveying length of the conveyor 16, especially in case of a conveyor 16 connecting beginning and end of a linear motor 1. Shuttles Tn that are currently moved by the conveyor 16 are simulated in the movement simulation unit 11 (not shown in Fig.4) as virtual shuttles VTk. In that way, collision between a shuttle Tn at the transition from the linear motor 1 to the conveyor 16 (or in the other direction) and a virtual shuttle VTk in the virtual workspace 6 (corresponding to a shuttle Tn moved on the conveyor 16) can be avoided simply by considering the virtual shuttle VTk in the existing collision avoidance of the linear motor 1.

The external handling device 15 could also be a simple inspection track or table (as example for a mechanical guide) onto which the shuttle Tn is moved manually by an operator for maintenance or inspection of the shuttle or inspection of a product carried by the shuttle Tn, for example. In this case it would also be possible that the shuttle Tn is removed from the inspection track or table by the operator. For the inspection track or table a virtual workspace 6 would be defined in the motor control unit 10 and the shuttle Tn moved from the linear motor 1 onto the inspection track or table would be simulated as virtual shuttles VTk whose movement is simulated in the virtual workspace 6. In order to obtain virtual shuttle movement setpoints VMSk for simulating the movement of the virtual shuttle VTk, a machine vision system, with cameras for example, could be provided that detects movement or position of a shuttle in space in the region of the inspection track or table.

However, the invention can not only be used for collision avoidance, but also for other use cases.

The simulated movement of a virtual shuttle VTk in the virtual workspace 6 may also be used for synchronizing the movement of a shuttle Tn in the stator workspace 3 to the movement of any moving external device, like a robot arm or another shuttle moved on another linear motor, for example. To this end, a virtual workspace 6 can be setup in the motor control unit 10 that represents the moving external device. The movement of a virtual shuttle VTk can be simulated in the virtual workspace 6. The simulated movement corresponds to the known movement of the moving external device. The movement setpoints MSn of the shuttle Tn on the stator workspace 3 are set so that the shuttle Tn on the stator workspace 3 follows the movement of the virtual shuttle VTk causing the movement of the shuttle Tn to be synchronized to the movement of the moving external device. In this case, the virtual workspace 6 and the stator workspace 3 may also overlap at least partially.

As the virtual workspace 6 may represent an external handling device 15 connected somehow to the linear motor 1, it is also possible that movement of shuttles Tn in the stator workspace 3 react to an error state of the external handling device 15. For example, if a processing station or a conveyor stops operation due to an error also movement of shuttles Tn in the stator workspace 3 could be affected by such an error. Shuttles Tn in the stator workspace 3 must be prevented to move to the processing station or conveyor or must be diverted (to another available processing station for example) in order to avoid congestions, for example. An error of an external handling device 15 may even make it necessary to stop shuttles Tn on the linear motor 1. This allows controlled error propagation in a transportation system comprising a linear motor 1 and an external handling device 15 to avoid or at least mitigate the effects of an error of the external handling device 15. This is of course also possible if an error occurs in the linear motor 1 as such an error can affect the external handling device 15 and consequently also the simulated movement of a virtual shuttle VTk in the virtual workspace 6.

The basic inventive idea, namely using a virtual workspace 6 with a simulated movement of a virtual shuttle VTk, may also be used in a different way, as explained in the following. The following represents a separate invention making use of the basic inventive idea of present invention.

Due to available processing capacities of a motor control unit 10, a motor control unit 10 may only be used to control a certain number of magnetic elements ME, like drive coils ASi. For large linear motor installations, this can make it necessary to use more than one motor control unit 10 to control the complete linear motor 1. This means that there are several stator workspaces 3 in the linear motor 1. There are also transport installations comprising a linear motor 1 and an external handling device 15 connected to the linear motor 1. A shuttle Tn can be moved on the linear motor 1 and on the external handling device 15, as explained above, for example. The external handling device 15 usually comprises its own control unit and is therefore not controlled by a stator workspace 3 of the linear motor 1. In such configurations, it is nevertheless desirable to provide a smooth and robust handover of a shuttle Tn from one control unit to another control unit, i.e. from one workspace to another workspace. Furthermore, it is desirable that such a handover can be performed at high speeds of the shuttle Tn, so that the shuttle Tn does not need to be slowed down for handover.

Because of the limitations of the stator workspace 3, it is not possible for a motor control unit 10 to command movement of a shuttle Tn to a position outside of the associated stator segments Sm. In Fig.5, for example, the motor control unit 10 associated with stator segment Sm cannot command shuttle Tn to move to a position on stator segment S1, as this position belongs to a different stator workspace 3 associated with a different motor control unit 10. However, for a handover it would be necessary that, during handover, the shuttle Tn is controlled by the control units of both involved motor parts, i.e. of the linear motor 1 and of the external handling device 15. The present limitations hinder handover of a shuttle Tn from a stator workspace 3 to an external handling device 15, or makes such a handover at least more difficult, when the involved motor parts are controlled by different control units. The virtual workspace 6 can be utilized to mitigate these problems and especially to allow a smooth and robust handover even at high shuttle Tn speeds, as explained in the following with reference to Fig.5.

In the embodiment of Fig.5, a linear motor 1 comprises more than one motor control unit 10 and therefore comprises more than one stator workspace 3. Each motor control unit 10 controls the magnetic elements ME, like drive coils ASi, of their associated stator segments Sm. In Fig.5 a shuttle Tn moves in direction of movement x and transitions from one stator workspace 3 to the other stator workspace 3.

A virtual workspace 6 is defined at least in the motor control unit 10 associated with the stator segment(s) Sm the shuttle Tn leaves during a shuttle Tn handover. The virtual workspace 6 represents the external handling device 15 and virtually extends the respective stator workspace 3 so that the stator workspace 3 and the virtual workspace 6 form a contiguous workspace for a shuttle Tn. "Contiguous" means that the virtual workspace 6 is arranged such relative to the stator workspace 3, so that movement of a shuttle Tn on the stator workspace 3 could be continued on the virtual workspace 6 if the virtual workspace 6 existed in the real world.

In order to improve the handover, for the at least one shuttle Tn on the stator workspace 3 associated with the stator segment(s) Sm the shuttle Tn leaves, a target position on the virtual workspace 6 is set for the shuttle Tn and the motor control unit 10 controls the drive coils ASi of the stator segment(s) Sm associated with the motor control unit 10 to move the shuttle Tn to the target position. The target position is a position outside of the stator workspace 3 the shuttle Tn leaves during handover. This is now possible, because the virtual workspace 6 "extends" the stator workspace 3 in movement direction x. Of course, the motor control unit 10 can only activate the physically present magnetic elements ME, like drive coils ASi, on the respective stator segment(s) Sm but not on the virtual workspace 6. But this is sufficient to move the shuttle Tn beyond the border of the stator workspace 3. Especially, this allows to actuate the magnetic elements ME, like drive coils ASi, on the stator segment(s) Sm the shuttle Tn leaves during handover. The motor control unit 10 associated with the stator workspace 3 the shuttle Tn enters during handover simultaneously takes over control of the entering shuttle Tn. The entering shuttle Tn could be detected on this stator workspace 3 by position sensor on the stator 2, for example, indicating to the motor control unit 10 to take over control of the entering shuttle Tn. This ensures a smooth and robust handover, even at high shuttle speeds.

Of course, the handover using the virtual workspace 6 can be combined with collision avoidance or error propagation as described above, by simulating movement of a virtual shuttle VTk in the virtual workspace 6.

For further improving the handover, the motor control units 10 of the adjacent stator workspaces 3 can also be connected to each other (as indicated with dashed lines in Fig.5) and could exchange data, like data regarding the shuttle Tn involved in the handover, for example.

Using a connection between the motor control units 10, known movement parameters (like position, speed, acceleration / deceleration) of a shuttle on one of the stator workspaces 3 could be used as virtual shuttle movement setpoints VMSk for simulating movement of a virtual shuttle VTk in the virtual workspace 6. To this end one of the motor control units 10 would provide the known movement parameters to the other motor control unit 10.

The handover of a shuttle Tn using a virtual workspace 6 can in the same way be realized for a handover between a linear motor 1 and any other external handling device 15. In the embodiment of Fig.4, the motor control unit 10 can command the shuttle Tn to move to a position outside of the linear motor 1 in order to move the shuttle Tn onto the conveyor 16.

In the embodiment of Fig.5, one of the stator segments S1, Sm could be moveable. This would allow to implement a kind of switch, for example. With such a switch multiple (at least one) linear motors 1 on an incoming side of the switch could be connected to multiple (at least) linear motors 1 on the outgoing side of the switch. The moveable stator segment could be moveable in height implementing a lift, or also in any other direction. An incoming shuttle Tn could be moved on an incoming linear motor 1 onto the moveable segment in that the movable segment (the switch) is represented by a virtual workspace 6. The moveable segment is then moved to any one of the available outgoing linear motors 1 and is then handed over to the outgoing linear motor 1.

Usually, during operation of a linear motor 1, operation data is associated with a shuttle Tn. Operation data can be data related to the shuttle Tn or to the product transported with the shuttle Tn and is usually stored in the motor control unit 10 of the linear motor 1. When the shuttle Tn leaves the stator workspace 3 the associated operation data is deleted in the motor control unit 10 and may be lost. To avoid this, the virtual workspace 6 can also be used as well. A shuttle Tn leaving the stator workspace 3 may be kept as virtual shuttle VTk in the virtual workspace 6. Therefore, the operating data for this shuttle Tn may also be kept. The operating data can be handed over to another control unit during a shuttle Tn handover, for example.

## Claims

1. Method for operating a linear motor (1) having a stator (2) with at least one stator segment (Sm) and at least one shuttle (Tn), wherein the stator (2) defines a stator workspace (3) along which the at least one shuttle (Tn) is movable on the stator (2), wherein a plurality of magnetic elements (ME) is arranged on the stator (2) and a plurality of drive magnets (4) is arranged on the shuttle (Tn), or vice versa, wherein at least some of the plurality of magnetic elements (ME) are activated under control of a motor control unit (10) in order to generate an electromagnetic field that interacts with the plurality of drive magnets (4) in order to move the at least one shuttle (Tn) in the stator workspace (3) under control of the motor control unit (10) in accordance with given shuttle movement setpoints (MSn), **characterized in that** a virtual workspace (6) is defined in the motor control unit (10), the virtual workspace (6) virtually extending the stator workspace (3) so that the stator workspace (3) and the virtual workspace (6) form a contiguous workspace for the shuttle (Tn), **in that** a movement of a virtual shuttle (VTk) in the virtual workspace (6) is simulated in the motor control unit using given virtual shuttle movement setpoints (VMSk) of the virtual shuttle (VTk), **and in that** the simulated movement of the virtual shuttle (VTk) in the virtual workspace (6) affects the shuttle movement setpoints (MSn) for moving the at least one shuttle (Tn) on the stator workspace (3) **or in that** the movement of the at least one shuttle (Tn) in the stator workspace (3) affects the virtual shuttle movement setpoints (VMSk) for moving the virtual shuttle (VTk) in the virtual workspace (6).

2. Method for operating a linear motor (1) that is connected to an external handling device (15), the linear motor (1) having a stator (2) with at least one stator segment (Sm) and at least one shuttle (Tn), wherein the stator (2) defines a stator workspace (3) along which the at least one shuttle (Tn) is movable on the stator (2), wherein a plurality of magnetic elements (ME) are arranged on the stator (2) and a plurality of drive magnets (4) is arranged on the shuttle (Tn), or vice versa, wherein at least some of the plurality of magnetic elements (ME) are activated under control of a first motor control unit (10) in order to generate an electromagnetic field that interacts with the plurality of drive magnets (4) in order to move the at least one shuttle (Tn) in the stator workspace (3) under control of the motor control unit (10) in accordance with given shuttle movement setpoints (MSn), and the external handling device (15) is provided to move the at least one shuttle (Tn) under control of a second motor control unit (10), **characterized in that** a virtual workspace (6) is defined in the first motor control unit (10), the virtual workspace (6) representing the external handling device (15) and virtually extending the stator workspace (3) so that the stator workspace (3) and the virtual workspace (6) form a contiguous workspace for the at least one shuttle (Tn), **and in that,** for the at least one shuttle (Tn) on the stator workspace (3), a target position on the virtual workspace (6) is set and the first motor control unit (10) controls the magnetic elements (ME) to move the at least one shuttle (Tn) to the target position.

3. Method according to claim 2, **characterized in that** a movement of a virtual shuttle (VTk) in the virtual workspace (6) is simulated in the first motor control unit (10) using given virtual shuttle movement setpoints (VMSk) of the virtual shuttle (VTk).

4. Method according to claim 1 or 3, **characterized in that** the shuttle movement setpoints (MSn) for moving the at least one shuttle (Tn) on the stator workspace (3) are affected, that the movement of the at least one shuttle (Tn) on the stator workspace (3) follows the simulated movement of the virtual shuttle (VTk) in the virtual workspace (6).

5. Method according to claim 1 or 3, **characterized in that** the shuttle movement setpoints (MSn) for moving the at least one shuttle (Tn) on the stator workspace (3) are affected to avoid collision with the virtual shuttle (VTk) in the virtual workspace (6).

6. Method according to claim 1, **characterized in that** the shuttle movement setpoints (MSn) for moving the at least one shuttle (Tn) on the stator workspace (3) are affected to bring the at least one shuttle (Tn) on the stator workspace (3) to a standstill.

7. Method according to claim 1, **characterized in that** the shuttle movement setpoints (MSn) for moving the at least one shuttle (Tn) on the stator workspace (3) are affected to change the movement path (Pn) of the at least one shuttle (Tn) on the stator workspace (3).

8. Method according to claim 1 or 3, **characterized in that** the movement of theat least one shuttle (Tn) in the stator workspace (3) is changed to a defined shuttle error movement when the stator (2) in the region of the at least one shuttle (Tn) enters into an error state causing the simulation of the virtual shuttle (VTk) to also change its simulated movement to a defined virtual shuttle error movement.

9. Method according to claim 8, **characterized in that** the defined shuttle error movement brings the at least one shuttle (Tn) in the stator workspace (3) to standstill and/or the defined virtual shuttle error movement brings the virtual shuttle (VTk) in the virtual workspace (6) to standstill.

10. Method according to claim 1, **characterized in that** the virtual workspace (6) represents an external handling device (15) connected to the linear motor (1) for moving the at least one shuttle (Tn) and the virtual shuttle movement setpoints (VMSk) result from the known movement of the shuttle (Tn) by the external handling device (15).

11. Method according to claim 2 or 10, **characterized in that** the external handling device (15) comprises at least one further stator segment (S1), wherein the at least one further stator segment (S1) defines a further stator workspace (3) along which the at least one shuttle (Tn) is movable, wherein a plurality of magnetic elements (ME) are arranged on the at least one further stator segment (S1), wherein at least some of the plurality of magnetic elements (ME) of the at least one further stator segment (S1) are activated under control of a further motor control unit (10) in order to generate an electromagnetic field that interacts with the plurality of drive magnets (4) in order to move the at least one shuttle (Tn) in the further stator workspace (3) under control of the further motor control unit (10) in accordance with given further shuttle movement setpoints (MSn).

12. Linear motor (1) having a stator (2) with at least one stator segment (Sm) and at least one shuttle (Tn), wherein the stator (2) defines a stator workspace (3) along which the at least one shuttle (Tn) is movable on the stator (2), wherein a plurality of magnetic elements (ME) is arranged on the stator (2) and a plurality of drive magnets (4) is arranged on the shuttle (Tn), or vice versa, wherein a motor control unit (10) is provided in the linear motor (1) and the motor control unit (10) is configured to activate at least some of the plurality of magnetic elements (ME) in order to generate an electromagnetic field that interacts with the plurality of drive magnets (4) in order to move the at least one shuttle (Tn) in the stator workspace (3) under control of the motor control unit (10) in accordance with given shuttle movement setpoints (MSn), **characterized in that** a virtual workspace (6) is defined in the motor control unit (10), the virtual workspace (6) virtually extending the stator workspace (3) so that the stator workspace (3) and the virtual workspace (6) form a contiguous workspace for the shuttle (Tn), **in that** the motor control unit (10) is configured to simulate a movement of a virtual shuttle (VTk) in the virtual workspace (6) using given virtual shuttle movement setpoints (VMSk) of the virtual shuttle (VTk), **and in that** the simulated movement of the virtual shuttle (VTk) in the virtual workspace (6) affects the shuttle movement setpoints (MSn) for moving the at least one shuttle (Tn) on the stator workspace (3) **or in that** the movement of the at least one shuttle (Tn) in the stator workspace (3) affects the virtual shuttle movement setpoints (VMSk) for moving the virtual shuttle (VTk) in the virtual workspace (6).

13. Linear motor (1) that is connected to an external handling device (15), the linear motor (1) having a stator (2) with at least one stator segment (Sm) and at least one shuttle (Tn), wherein the stator (2) defines a stator workspace (3) along which the at least one shuttle (Tn) is movable on the stator (2), wherein a plurality of magnetic elements (ME) are arranged on the stator (2) and a plurality of drive magnets (4) is arranged on the shuttle (Tn), or vice versa, wherein a first motor control unit (10) is provided in the linear motor (1) and the motor control unit (10) is configured to activate at least some of the plurality of magnetic elements (ME) in order to generate an electromagnetic field that interacts with the plurality of drive magnets (4) in order to move the at least one shuttle (Tn) in the stator workspace (3) under control of the motor control unit (10) in accordance with given shuttle movement setpoints (MSn), and the external handling device (15) is provided to move the at least one shuttle (Tn) under control of a second motor control unit (10), **characterized in that** a virtual workspace (6) is defined in the first motor control unit (10), the virtual workspace (6) representing the external handling device (15) and virtually extending the stator workspace (3) so that the stator workspace (3) and the virtual workspace (6) form a contiguous workspace for the at least one shuttle (Tn), **and in that,** for the at least one shuttle (Tn) on the stator workspace (3), a target position on the virtual workspace (6) is set and the first motor control unit (10) is configured to control the magnetic elements (ME) to move the at least one shuttle (Tn) to the target position.
